# EUROPÄISCHE PATENTANMELDUNG

(11) **EP 4 001 972 A1**
(43) Veröffentlichungstag der Anmeldung: **25.05.2022**
(21) Anmeldenummer: 21209600.2
(22) Anmeldetag: 22.11.2021
(51) Int. Cl.: G01W 1/10

(54) **VERFAHREN ZUR ERMITTLUNG EINER METEOROLOGISCHEN GRÖSSE**

(30) Priorität: 24.11.2020 AT 510202020
(71) Anmelder: UBIMET GmbH, 1220 Wien (AT)
(72) Erfinder: SPATZIERER, Manfred, 1100 Wien (AT)
(74) Vertreter: Burger, Hannes

(57) **Zusammenfassung**

Die Erfindung betrifft ein Verfahren zur Ermittlung, insbesondere Vorhersage, zumindest einer meteorologischen Größe (10) zur Beschreibung einer aktuellen und/oder in der Vergangenheit liegenden und/oder zukünftigen Wettersituation mittels einer Datenverarbeitungseinrichtung (9), bei dem
(a) aus ersten Messungen (11) gewonnene erste meteorologische Para-meter (1) bereitgestellt werden, wobei die ersten meteorologischen Parameter (1) Gitterpunkten (P1) eines ersten Gitters (G1) zugeordnet sind,
dadurch gekennzeichnet, dass bei dem Verfahren
(b) zumindest ein Vorgabeparameter (2), welcher über eine Schnittstelle (8), insbesondere einer Benutzerschnittstelle, eingebbar ist, empfangen wird,
(c) die zumindest eine meteorologische Größe (10) in Abhängigkeit des zumindest eines Vorgabeparameters (2) durch Anwendung eines ersten Algorithmus (7) aus den ersten meteorologischen Parametern (1) ermittelt wird,
wobei vorzugsweise die ermittelte meteorologische Größe (10) an einer Benutzerschnittstelle (18) ausgegeben und/oder mittels einer elektronischen Nachrichtenversandeinrichtung (17) versendet wird.

## Beschreibung

Die Erfindung betrifft ein Verfahren zur Ermittlung, insbesondere Vorhersage, zumindest einer meteorologischen Größe zur Beschreibung einer aktuellen und/oder in der Vergangenheit liegenden und/oder zukünftigen Wettersituation gemäß dem Oberbegriff des Anspruch 1.

Im Stand der Technik ist es bekannt, meteorologische Messdaten einer Vielzahl von Messstationen so zu verarbeiten bzw. auf ein Gitter umzulegen, dass jedem Gitterpunkt des Gitters ein oder mehrere meteorologische Parameter zugeordnet sind. Diese Parameter beschreiben vergangene, aktuelle oder zukünftige Wettersituationen. Um das Wetter in einer bestimmten Gegend zu beschreiben wurde der nächstliegende Gitterpunkt gewählt und die diesem zugeordneten Parameter zur Beschreibung bzw. Vorhersage des Wetters herangezogen. Es hat sich jedoch gezeigt, dass die Flexibilität und Genauigkeit einer solchen Vorgehensweise unzureichend sind. Außerdem können lokale Gegebenheiten bzw. subjektive Empfindungen, welche mit dem Wetter einhergehen, nicht berücksichtigt werden.

Aufgabe der vorliegenden Erfindung war es, die Nachteile des Standes der Technik zu überwinden und ein Verfahren zur Verfügung zu stellen, mittels dem ein vorliegender Datensatz meteorologischer Daten mit auf Gitterpunkten verteilten Parametern flexibel für verschiedene Zwecke verwendbar ist. Insbesondere soll ein Benutzer des Systems in der Lage sein, zeitlich und örtlich genaue Aus- bzw. Vorhersagen betreffend einer vergangenen, aktuellen oder zukünftigen Wettersituationen zu treffen. In bevorzugten Ausführungsformen soll sich das Verfahren durch Konfigurierbarkeit auszeichnen, sodass meteorologische Größen oder daraus abgeleitete Werte oder Informationen und/oder die Verfahrensschritte des Verfahrens selbst individuell bzw. an eine konkrete - örtliche, zeitliche oder subjektive - Situation anpassbar sind.

Diese Aufgabe wird durch ein eingangs erwähntes Verfahren dadurch gelöst, dass bei dem Verfahren
(b) zumindest ein Vorgabeparameter, welcher über eine Schnittstelle, ins-besondere einer Benutzerschnittstelle, eingebbar ist, empfangen wird,
(c) die zumindest eine meteorologische Größe in Abhängigkeit des zumindest eines Vorgabeparameters durch Anwendung eines Algorithmus aus den ersten meteorologischen Parametern ermittelt wird,
wobei vorzugsweise die ermittelte meteorologische Größe an einer Benutzerschnittstelle ausgegeben und/oder mittels einer elektronischen Nachrichtenversandeinrichtung versendet wird.

Durch das Eingeben eines Vorgabeparameters kann der Benützer situationsbezogen bestimmen, welche Information aus den - aus ersten Messungen gewonnenen - ersten meteorologischen Parametern, die jeweils Gitterpunkten eines ersten Gitters zugeordnet sind, ermittelt bzw. berechnet werden. Die ersten meteorlogischen Parameter liegen vorzugsweise auch für verschiedene Zeitpunkte in der Vergangenheit vor, sodass beispielsweise eine punktgenaue Ermittlung der Wettersituation an einem bestimmten Ort (d.h. an einem Punkt) zu einem Zeitpunkt in der Vergangenheit ermittelt werden kann. Dies könnte beispielsweise in der Schadensabwicklung nach einem Unfall (evtl. verursacht durch Nebel, Regen, Schnee, Eis, Wind, etc.) oder zerstörerischen Naturereignissen von Relevanz sein. Unter Heranziehung der ersten meteorologischen Parameter können z.B. auch für beliebige Punkte, die zwischen den einzelnen Gitterpunkten liegen, und beliebige Zeitpunkte meteorologische Größen berechnet werden.

Die vorliegende Erfindung kann auch als virtuelle Wetterstation bezeichnet werden. Das der virtuellen Wetterstation zugrunde liegende Verfahren basiert zwar auf echten, ersten Messungen und daraus gewonnenen ersten meteorologischen Parametern, jedoch erfolgen die weiteren Verfahrensschritte in Abhängigkeit eines Vorgabeparameters, welcher als Vorgabe zur Ermittlung der meteorologischen Größe dient. Die Vorgabe kann eine Orts- oder Zeitkoordinate oder ein meteorologischer Vergleichsparameter sein. Der Vorgabeparameter wird mit den ersten Parametern durch den ersten Algorithmus verknüpft.

Das erste (und zweite) Gitter ist ein räumliches (d.h. zwei- oder dreidimensionales) Gitter, d.h. die Gitterpunkte entsprechen verschiedenen Ortskoordinaten des vom Gitter erfassten Gebietes.

Eine bevorzugte Ausführungsform zeichnet sich dadurch aus, dass der zumindest eine Vorgabeparameter eine Zeitkoordinate, vorzugsweise einen Zeitpunkt, umfasst und dass in Schritt (c) die zumindest eine meteorologische Größe für diese Zeitkoordinate ermittelt wird, wobei vorzugsweise die Zeitkoordinate in der Vergangenheit liegt. Durch einen solchen Vorgabeparameter wird für eine bestimmte Zeitkoordinate eine meteorologische Größe ermittelt. Die Ermittlung kann für eine bestimmte Region oder eine Ortskoordinate beschränkt sein, oder die gesamte vom ersten Gitter abgedeckte Region durchgeführt werden. Wenn für die vorgegebene Zeitkoordinate keine meteorologischen Parameter vorliegen, so kann die meteorologische Größe durch Interpolation, Mittelung und/oder Berücksichtigung der zeitlich am nächsten liegenden Parameter ermittelt bzw. geschätzt werden.

Das Verfahren ist insbesondere dann von Vorteil, wenn Schritt (b) und (c) aus den ersten meteorologischen Parametern zum ersten Mal seit deren Generierung (aus den ersten Messungen) eine meteorologische Größe für einen Zeitpunkt in der Vergangenheit oder für einen Punkt (Ortskoordinate), zu dem keine Daten vorliegen und der auch mit keinem Gitterpunkt übereinstimmt, berechnet wird.

Eine bevorzugte Ausführungsform zeichnet sich dadurch aus, dass der zumindest eine Vorgabeparameter eine Ortskoordinate, vorzugsweise einen Punkt, umfasst und dass in Schritt (c) die zumindest eine meteorologische Größe für diese Ortskoordinate ermittelt wird, wobei vorzugsweise die Ortskoordinate zwischen den Gitterpunkten des ersten Gitters liegt. Durch Vorgabe einer Ortskoordinate kann mittels des ersten Algorithmus eine meteorologische Größe ermittelt werden, auch wenn die Ortskoordinate nicht mit einem Gitterpunkt zusammenfällt. Es kann somit das Wetter virtuell für einen bestimmten Punkt berechnet werden, obwohl für diesen konkreten Punkt weder Messdaten, noch Gitterdaten (erste meteorologische Parameter) vorliegen. Dies erfolgt vorzugsweise durch Interpolation und/oder Mittelung der ersten Parameter und/oder unter Berücksichtigung der Parameter der räumlich am nächsten liegenden Gitterpunkte.

Eine bevorzugte Ausführungsform zeichnet sich dadurch aus, dass der zumindest eine Vorgabeparameter eine Charakterisierung zumindest einer örtlichen Gegebenheit, vorzugsweise betreffend den Bewuchs und/oder die Bebauung und/oder ein wind- und/oder sonnenabschatten-des Objekt und/oder die Seehöhe und/oder die Landschaftsform, umfasst. Im Zusammenhang mit der Vorgabe einer Ortskoordinate führen die zusätzlich vorgegebenen örtlichen Gegebenheiten dazu, dass die meteorologische Größe für diesen speziellen Ort noch genauer und gezielter ermittelt werden kann. Beispielsweise führt ein Vorgabeparameter, der eine sich in West-Ost Richtung erstreckende Mauer beinhaltet bzw. beschreibt, dass eine - als meteorologische Größe ausgegebene - Windstärke von Süd- oder Nordwinden unmittelbar hinter der Mauer geringer sein wird, als dies ohne Mauer der Fall wäre. Ähnlich verhält es sich mit einer - als meteorologische Größe ausgegebene - Temperatur (insbesondere zur Mittagszeit), wenn als Vorgabeparameter eine schattenwerfende Baumgruppe z.B. südlich der betreffenden Ortskoordinate eingegeben wird. Durch die Möglichkeit individueller Vorgabeparameter wird eine virtuelle Wetterstation geschaffen, d.h. die meteorologische Größe wird mittels eines Algorithmus bzw. eines Modells modelliert und entsprechend angepasst.

Eine bevorzugte Ausführungsform zeichnet sich dadurch aus, dass der zumindest eine Vorgabeparameter zumindest einen meteorologischen Vergleichsparameter umfasst, der - unabhängig von den ersten Messungen - durch Beobachtung und/oder aus zumindest einer zweiten Messung gewonnen wird, wobei vorzugsweise der Vergleichsparameter die aktuelle Wettersituation beschreibt. Durch einen solchen Vergleich kann für einen bestimmten Ort, an dem die Beobachtungen oder zweiten Messungen durchgeführt werden, die Aussagekraft der ermittelten meteorologischen Größe bestimmt oder verbessert werden. Dazu kann z.B. der Algorithmus und/oder die meteorologische Größe angepasst werden. Diese Vergleiche können über einen längeren Zeitraum erfolgen und bei einem selbstlernenden Algorithmus dazu führen, dass die meteorologische Größe mit der Zeit immer besser vorhergesagt wird.

Eine bevorzugte Ausführungsform zeichnet sich dadurch aus, dass zumindest ein Situationsparameter, welcher über eine Schnittstelle, insbesondere einer Benutzerschnittstelle, eingebbar ist, empfangen wird,
wobei der Situationsparameter der ermittelten meteorologischen Größe zugeordnet wird
und/oder wobei der Situationsparameter mit der ermittelten meteorologischen Größe verglichen wird
und/oder wobei in Abhängigkeit des Situationsparameters, vorzugsweise in Abhängigkeit einer Abweichung der ermittelten meteorologischen Größe von dem Situationsparameter, die ermittelte meteorologische Größe angepasst und/oder der Algorithmus verändert wird,
wobei vorzugsweise der Situationsparameter eine aktuelle Situation, insbesondere die Wettersituation oder ein durch die Wettersituation bedingtes Vorgehen, insbesondere einen Enteisungseinsatz oder einen Straßenräumungseinsatz, beschreibt.

Der Situationsparameter kann als Feedback für das System dienen und dafür sorgen, dass die Ermittlung der meteorologischen Größe oder durch das Wetter bedingte Situationen genauer ermittelt und/oder vorhergesagt werden können.

Eine bevorzugte Ausführungsform zeichnet sich dadurch aus, dass die meteorologische Größe für verschiedene Zeitpunkte ermittelt wird und Situationsparameter für korrespondierende Zeitpunkte empfangen werden. Dadurch wird ein direkter Vergleich oder eine direkte Verknüpfung ermöglicht.

Eine bevorzugte Ausführungsform zeichnet sich dadurch aus, dass der zumindest eine Situationsparameter einen meteorologischen Parameter umfasst, der - unabhängig von den ersten Messungen - durch Beobachtung und/oder aus zumindest einer zweiten Messung gewonnen wird. Auch hier dienen die Situationsparameter dem System als Feedback und kann dadurch eine virtuelle Wetterstation für einen bestimmten Ort "eingerichtet" werden. Die Situationsparameter in Form von meteorologischen Parametern sorgen dafür, dass die "nackten" ersten meteorologischen Parametern an "Lokalität" gewinnen, indem durch Beobachtung und/oder zweite Messung an dem bestimmten Ort die tatsächlichen Parameter bestimmt werden. Durch die sich daraus ergebende Beziehung bzw. Abhängigkeit zwischen den ersten meteorologischen Parametern und den Situationsparametern, kann auch der Algorithmus besser angepasst werden, um sozusagen ortsgenaue Aus- bzw. Vorhersagen treffen zu können.

Eine bevorzugte Ausführungsform zeichnet sich dadurch aus, dass der zumindest eine Situationsparameter einen Parameter umfasst, der einen physiologischen Zustand und/oder eine subjektive Empfindung zumindest einer Person beschreibt. Dadurch können neben der meteorologischen Größe auch vom Wetter abhängige subjektive Empfindungen (Wetterfühligkeit z.B. bei Föhn, Wetterumschwung, etc.) berücksichtigt werden. Subjektive Empfindungen können insbesondere dann vorteilhaft verarbeitet werden, wenn die damit zusammenhängenden Werte vergleichbar sind und/oder wenn subjektive Empfindungen von derselben Person eingemeldet werden und/oder wenn subjektive Empfindungen unter denselben äußeren Bedingungen (z.B. Umgebungsparameter) und/oder inneren Bedingungen (z.B. Aktivitätszustand einer Person) erfasst und in das System eingespeist werden.

Eine bevorzugte Ausführungsform zeichnet sich dadurch aus, dass in Abhängigkeit der ermittelten meteorologischen Größe - vorzugsweise mittels eines Algorithmus oder einer Zuordnungstabelle - ein Situationsparameter, welcher vorzugsweise ein meteorologischer Parameter ist und/oder einen physiologischen Zustand und/oder eine subjektive Empfindung zumindest einer Person beschreibt, ermittelt oder geschätzt wird, wobei vorzugsweise der Situationsparameter an einer Benutzerschnittstelle ausgegeben und/oder mittels einer elektronischen Nachrichtenversandeinrichtung versendet wird. Ein Situationsparameter kann nicht nur dem System eingegeben werden, sondern auch vom System ermittelt oder geschätzt werden und wahlweise ausgegeben/versendet werden.

Eine bevorzugte Ausführungsform zeichnet sich dadurch aus, dass eine meteorologische Größe unabhängig von dem zumindest einen Vorgabeparameter durch Anwendung eines Algorithmus aus den ersten meteorologischen Parametern ermittelt wird.

Eine bevorzugte Ausführungsform zeichnet sich dadurch aus, dass die unabhängig von dem zumindest einen Vorgabeparameter ermittelte meteorologische Größe und die - gemäß Schritt (c) - in Abhängigkeit des zumindest eines Vorgabeparameters ermittelte meteorologische Größe miteinander verglichen werden, wobei vorzugsweise in Abhängigkeit der Abweichung der unabhängig von dem zumindest einen Vorgabeparameter ermittelten meteorologischen Größe von der in Abhängigkeit des zumindest eines Vorgabeparameters ermittelten meteorologischen Größe der Algorithmus verändert oder angepasst wird und/oder ein aus beiden Größen abgeleiteter Wert ermittelt und vorzugsweise an einer Benutzerschnittstelle ausgegeben und/oder vorzugsweise mittels einer elektronischen Nachrichtenversandeinrichtung versendet wird. Auch mit dieser Ausführungsform kann die Abhängigkeit des Algorithmus vom Vorgabeparameter und somit die "nackten" ersten meteorologischen Parameter mit der ermittelten meteorologischen Größe verglichen bzw. in Beziehung gesetzt werden.

Eine bevorzugte Ausführungsform zeichnet sich dadurch aus, dass
vor oder in dem Schritt (c) aus den ersten - den Gitterpunkten des ersten Gitters zugeordneten - Parametern zweite - den Gitterpunkten eines zweiten Gitters zugeordneten - Parameter gebildet werden, wobei die Gitterpunkte des zweiten Gitters räumlich höher aufgelöst sind als die Gitterpunkte des ersten Gitters, wobei vorzugsweise die Bildung der zweiten Parameter durch Interpolation und/oder Mittelung der ersten Parameter erfolgt, und
die zumindest eine meteorologische Größe aus den zweiten meteorologischen Parametern, vorzugsweise durch Interpolation und/oder Mittelung, abgeleitet wird.

Durch diese Schritte kann eine besonders hohe räumliche Auflösung bei relativ geringem Rechenaufwand erreicht werden.

Eine bevorzugte Ausführungsform zeichnet sich dadurch aus, dass die ersten meteorologischen Parameter Werte der Temperatur und/oder des Luftdrucks und/oder der Luftfeuchtigkeit und/oder der Windstärke und/oder der Windrichtung und/oder des Niederschlags und/oder der Bewölkung und/oder der Sonneneinstrahlung umfassen.

Eine bevorzugte Ausführungsform zeichnet sich dadurch aus, dass die zumindest eine meteorologische Größe einen Wert der Temperatur und/oder des Luftdrucks und/oder der Luftfeuchtigkeit und/oder der Windstärke und/oder der Windrichtung und/oder des Niederschlags und/oder der Bewölkung und/oder der Sonneneinstrahlung umfasst.

Eine bevorzugte Ausführungsform zeichnet sich dadurch aus, dass die ersten meteorologischen Parameter aktuelle und/oder in der Vergangenheit liegende und/oder zukünftig zu erwartende Werte umfassen.

Eine bevorzugte Ausführungsform zeichnet sich dadurch aus, dass der Algorithmus ein konfigurierbarer und/oder selbstlernender Algorithmus ist. Der Algorithmus ist z.B. durch die Vorgabeparameter konfigurierbar. Selbstlernender Algorithmus ist besonders bevorzugt, da er ausgehend von Vorgabeparametern und/oder Situationsparametern, die z.B. über einen Zeitraum zu verschiedenen Zeitpunkten (an einer Schnittstelle) eingegeben werden, erkennt wie er sich verändern muss, um die meteorologische Größe bestmöglich und genau zu ermitteln.

Eine bevorzugte Ausführungsform zeichnet sich dadurch aus, dass die Datenverarbeitungseinrichtung ein tragbares Gerät, vorzugsweise ein Smartphone oder ein Tablett, ist. Die Datenverarbeitung kann auch in Form eines ein Gehäuse aufweisenden Gerätes, z.B. in Form einer Wetterstation, ausgebildet sein.

Eine bevorzugte Ausführungsform zeichnet sich dadurch aus, dass die Datenverarbeitungseinrichtung eine Messeinrichtung zur Messung zumindest eines meteorologischen Parameters umfasst. Durch diese Messeinrichtung können die oben erwähnten zweiten Messungen durchgeführt und vorzugweise direkt - über eine Schnittstelle - dem Verfahren zugeführt werden. Das Ziel wird auch erreicht mit einem Algorithmus zur Ermittlung, insbesondere Vorhersage, zumindest einer meteorologischen Größe zur Beschreibung einer aktuellen und/oder in der Vergangenheit liegenden und/oder zukünftigen Wettersituation, wobei der Algorithmus die Schritte eines erfindungsgemäßen Verfahrens aufweist.

Das Ziel wird auch erreicht mit einer Datenverarbeitungsvorrichtung und/oder auf einem Datenträger gespeichertem Computerprogrammprodukt, zur Ermittlung, insbesondere Vorhersage, zumindest einer meteorologischen Größe zur Beschreibung einer aktuellen und/oder in der Vergangenheit liegenden und/oder zukünftigen Wettersituation, wobei in der Datenverarbeitungsvorrichtung und/oder in dem Computerprogrammprodukt ein erfindungsgemäßer Algorithmus hinterlegt ist.

Zum besseren Verständnis der Erfindung wird diese anhand der nachfolgenden Figuren näher erläutert.

Es zeigen jeweils in stark vereinfachter, schematischer Darstellung:
- Fig. 1: ein Fließdiagramm einer ersten Ausführungsform der Erfindung;
- Fig. 2: ein Fließdiagramm einer zweiten Ausführungsform der Erfindung;
- Fig. 3: ein Fließdiagramm einer dritten Ausführungsform der Erfindung;
- Fig. 4: eine Variante der ersten Ausführungsform;
- Fig. 5: eine Datenverarbeitungsvorrichtung in Form eines Smartphones und einen Datenspeicher.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

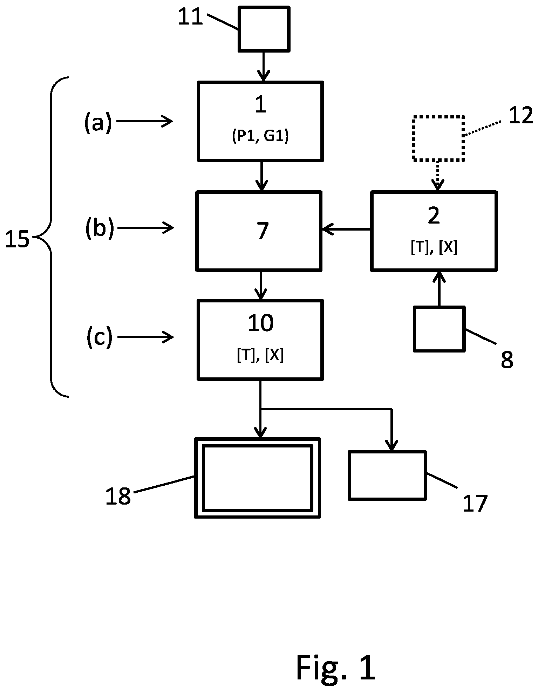

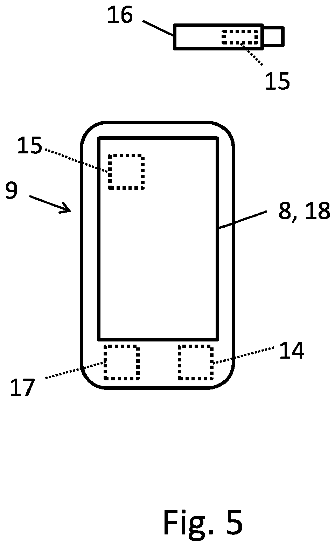

Fig. 1 zeigt eine Ausführungsform des erfindungsgemäßen Verfahrens zur Ermittlung, insbesondere Vorhersage, zumindest einer meteorologischen Größe 10 zur Beschreibung einer aktuellen und/oder in der Vergangenheit liegenden und/oder zukünftigen Wettersituation. Das Verfahren wird mittels einer Datenverarbeitungseinrichtung 9 (siehe Fig. 5) durchgeführt.

Dem Verfahren vorangestellt sind erste Messungen 11, welche z.B. durch eine Vielzahl von - an verschiedenen Orten aufgestellten - Wettermessstationen und/oder mittels Wetterballons und/oder aus Satellitenbildern und/oder mittels Funksignalen, die durch die Atmosphäre mehr oder weniger stark (durch Wolken, Nebel, Niederschlag, etc.) abgeschwächt werden.

Aus diesen ersten Messungen 11 werden erste meteorologische Parameter 1, welche jeweils Gitterpunkten P1 eines Gitters G1 zugeordnet sind, gewonnen. Die ersten meteorologischen Parameter 1 können Werte der Temperatur und/oder des Luftdrucks und/oder der Luftfeuchtigkeit und/oder der Windstärke und/oder der Windrichtung und/oder des Niederschlags und/oder der Bewölkung und/oder der Sonneneinstrahlung umfassen.

Die ersten meteorologischen Parameter 1 können aktuelle und/oder in der Vergangenheit liegende und/oder zukünftig zu erwartende Werte umfassen.

Die Erfindung ist sowohl auf ein Verfahren als auch auf einen (übergeordneten) Algorithmus 15 - siehe Figuren - zur Ermittlung, insbesondere Vorhersage, zumindest einer meteorologischen Größe 10 zur Beschreibung einer aktuellen und/oder in der Vergangenheit liegenden und/oder zukünftigen Wettersituation, gerichtet.

Im Schritt (a) werden aus den ersten Messungen 11 gewonnene erste meteorologische Parameter 1 bereitgestellt, wobei die ersten meteorologischen Parameter 1 Gitterpunkten P1 eines ersten Gitters G1 zugeordnet sind. Vorzugsweise ist jedem Gitterpunkt P1 des Gitters G1 zumindest ein, vorzugsweise mehrere erste Parameter (z.B. Temperatur, Luftdruck, Luftfeuchtigkeit, etc.) zugeordnet.

Im Schritt (b) wird zumindest ein Vorgabeparameter 2, welcher über eine Schnittstelle 8, insbesondere einer Benutzerschnittstelle, eingebbar ist, empfangen. Der Vorgabeparameter kann z.B. durch einen Benützer der "virtuellen Wetterstation" eingegeben werden.

Im Schritt (c) wird die zumindest eine meteorologische Größe 10 in Abhängigkeit des zumindest eines Vorgabeparameters 2 durch Anwendung eines ersten Algorithmus 7 aus den ersten meteorologischen Parametern 1 ermittelt. Der erste Algorithmus 7 ist vorzugsweise ein (durch die Vorgabeparameter 2) konfigurierbarer und/oder selbstlernender Algorithmus.

Die zumindest eine meteorologische Größe 10 kann - ebenso wie die ersten meteorologischen Parameter - Werte der Temperatur und/oder des Luftdrucks und/oder der Luftfeuchtigkeit und/oder der Windstärke und/oder der Windrichtung und/oder des Niederschlags und/oder der Bewölkung und/oder der Sonneneinstrahlung umfassen.

Die solcherart ermittelte meteorologische Größe 10 wird vorzugsweise an einer Benutzerschnittstelle 18, insbesondere an einem Bildschirm, ausgegeben und/oder mittels einer elektronischen Nachrichtenversandeinrichtung 17 (E-Mail, Kurznachricht, SMS, etc.) versendet.

Wie in Fig. 1 angedeutet kann der zumindest eine Vorgabeparameter 2 eine Zeitkoordinate T, vorzugsweise einen Zeitpunkt, umfassen, wobei dann in Schritt (c) die zumindest eine meteorologische Größe 10 für diese Zeitkoordinate T ermittelt wird. Die Zeitkoordinate T kann in der Vergangenheit, in der Gegenwart oder in der Zukunft liegen.

Wie in Fig. 1 ebenfalls angedeutet kann der zumindest eine Vorgabeparameter eine Ortskoordinate X, vorzugsweise einen Punkt, umfassen, wobei dann in Schritt (c) die zumindest eine meteorologische Größe 10 für diese Ortskoordinate X ermittelt wird. Die Ortskoordinate X kann dabei auch zwischen den Gitterpunkten P1 des ersten Gitters G1 liegen. Dies erfolgt vorzugsweise durch Interpolation und/oder Mittelung der ersten Parameter 1 und/oder unter Berücksichtigung der Parameter 1 der räumlich am nächsten liegenden Gitterpunkte P1.

Zusätzlich kann der zumindest eine Vorgabeparameter 2 auch eine Charakterisierung zumindest einer örtlichen Gegebenheit, vorzugsweise betreffend den Be-wuchs und/oder die Bebauung und/oder ein wind- und/oder sonnenabschatten-des Objekt und/oder die Seehöhe und/oder die Landschaftsform, umfassen. Die örtlichen Gegebenheiten haben einen wesentlichen Einfluss auf die lokale Wettersituation und könne so die Aus- bzw. Vorhersage verbessern.

In einer weiteren Ausführungsform kann der zumindest eine Vorgabeparameter 2 zumindest einen meteorologischen Vergleichsparameter umfassen, der - unabhängig von den ersten Messungen 11 - durch Beobachtung und/oder aus zumindest einer zweiten Messung 12 gewonnen wird, wobei vorzugsweise der Vergleichsparameter die aktuelle Wettersituation beschreibt.

Es können somit - wie vorstehend beschrieben - auch mehrere Vorgabeparameter (z.B. Zeit und/oder Ort und/oder lokale Gegebenheit(en) und/oder meteorologischer Vergleichsparameter) eingegeben werden.

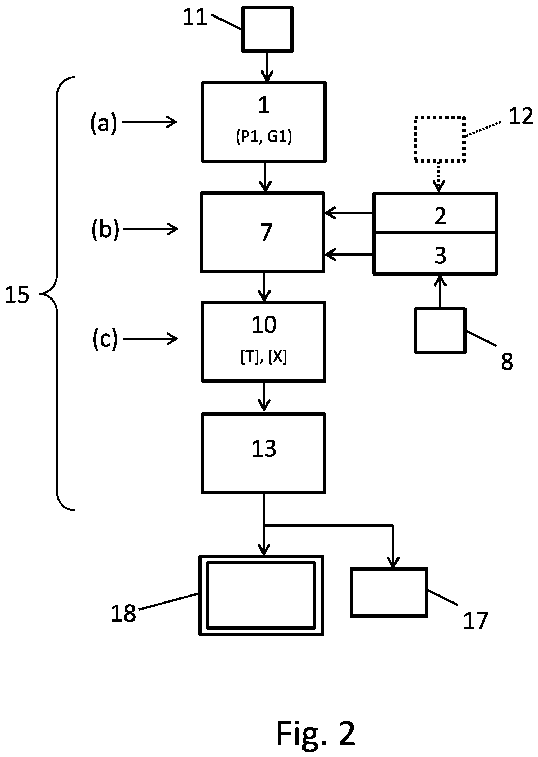

Fig. 2 zeigt eine Ausführungsform, bei der zumindest ein Situationsparameter 3, welcher über eine Schnittstelle 8, insbesondere einer Benutzerschnittstelle, eingebbar ist, empfangen wird, wobei der Situationsparameter 3 der ermittelten meteorologischen Größe 10 zugeordnet und/oder mit der ermittelten meteorologischen Größe 10 verglichen werden kann. Es kann auch in Abhängigkeit des Situationsparameters 3, vorzugsweise in Abhängigkeit einer Abweichung der ermittelten meteorologischen Größe 10 von dem Situationsparameter 3, die ermittelte meteorologische Größe 10 angepasst und/oder der erste Algorithmus 7 verändert werden. Der Situationsparameter 3 beschreibt eine aktuelle Situation, insbesondere die Wettersituation oder ein durch die Wettersituation bedingtes Vorgehen, insbesondere einen Enteisungseinsatz (Flughafen) oder einen Straßenräumungseinsatz.

Die meteorologische Größe 10 kann dabei für verschiedene Zeitpunkte ermittelt und Situationsparameter 3 für korrespondierende Zeitpunkte empfangen werden.

Fig. 2 zeigt, dass der zumindest eine Situationsparameter 3 einen meteorologischen Parameter umfassen kann, der - unabhängig von den ersten Messungen 11 - durch Beobachtung und/oder aus zumindest einer zweiten Messung 12 gewonnen werden kann.

Der zumindest eine Situationsparameter 3 kann aber auch einen Parameter umfassen, der einen physiologischen Zustand und/oder eine subjektive Empfindung zumindest einer Person beschreibt.

Es ist bevorzugt, wenn - nicht nur Situationsparameter 3 eingegeben werden, sondern auch - in Abhängigkeit der ermittelten meteorologischen Größe 10 - vorzugsweise mittels eines Algorithmus oder einer Zuordnungstabelle - ein Situationsparameter 13, welcher vorzugsweise ein meteorologischer Parameter ist und/oder einen physiologischen Zustand und/oder eine subjektive Empfindung zumindest einer Person beschreibt, ermittelt oder geschätzt wird. Der Situationsparameter 13 kann ebenso an einer Benutzerschnittstelle 18 ausgegeben und/oder mittels einer elektronischen Nachrichtenversandeinrichtung 17 versendet werden.

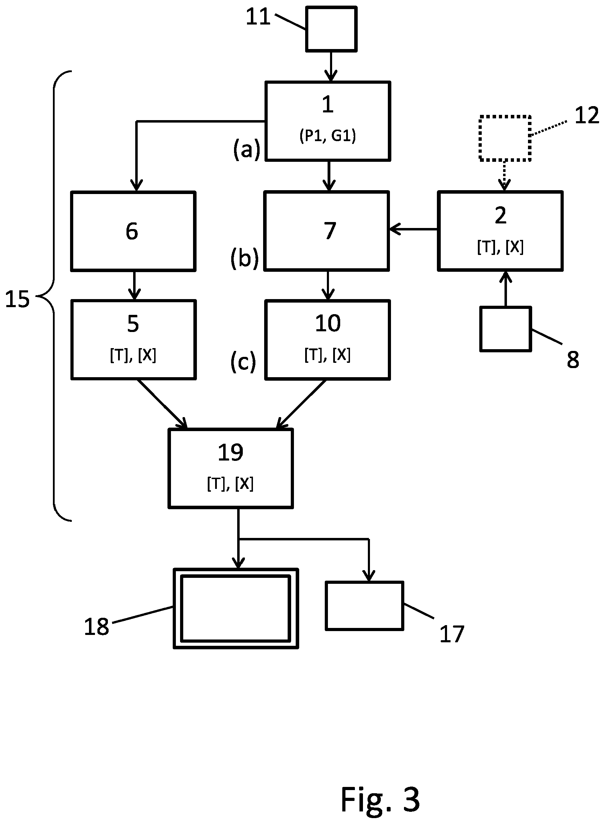

Gemäß Ausführungsform der Fig. 3 wird eine meteorologische Größe 5 unabhängig von dem zumindest einen Vorgabeparameter 2 durch Anwendung eines zweiten Algorithmus 6 aus den ersten meteorologischen Parametern 1 ermittelt. Die unabhängig von dem zumindest einen Vorgabeparameter (2) ermittelte meteorologische Größe 5 und die - gemäß Schritt (c) - in Abhängigkeit des zumindest eines Vorgabeparameters 2 ermittelte meteorologische Größe 10 können miteinander verglichen werden, wobei vorzugsweise in Abhängigkeit der Abweichung der unabhängig von dem zumindest einen Vorgabeparameter 2 ermittelten meteorologischen Größe 5 von der in Abhängigkeit des zumindest eines Vorgabeparameters 2 ermittelten meteorologischen Größe 10 der erste Algorithmus 7 verändert oder angepasst wird und/oder ein aus beiden Größen 5, 10 abgeleiteter Wert 19 ermittelt und vorzugsweise an einer Benutzerschnittstelle 18 ausgegeben und/oder vorzugsweise mittels einer elektronischen Nachrichtenversand-einrichtung 17 versendet wird.

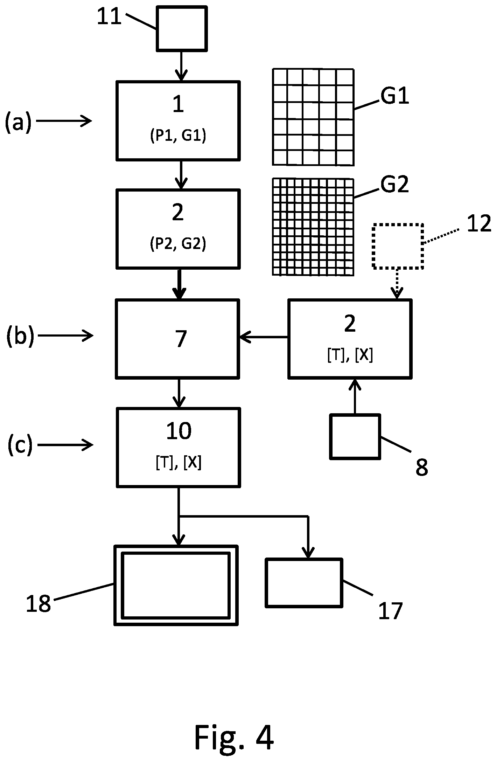

Die in Fig. 4 dargestellte Ausführungsform zeichnet sich dadurch aus, dass
vor oder in dem Schritt (c) aus den ersten - den Gitterpunkten P1 des ersten Gitters G1 zugeordneten - Parametern 1 zweite - den Gitterpunkten P2 eines zweiten Gitters G2 zugeordneten - Parameter 4 gebildet werden, wobei die Gitterpunkte P2 des zweiten Gitters G2 räumlich höher aufgelöst sind als die Gitterpunkte P1 des ersten Gitters G1, wobei vorzugsweise die Bildung der zweiten Parameter 4 durch Interpolation und/oder Mittelung der ersten Parameter 1 erfolgt, und
die zumindest eine meteorologische Größe 10 aus den zweiten meteorologischen Parametern 4, vorzugsweise durch Interpolation und/oder Mittelung, abgeleitet wird.

Fig. 5 zeigt schließlich eine Datenverarbeitungseinrichtung 9 in Form eines tragbaren Gerätes, vorzugsweise eines Smartphones oder Tabletts. Es ist bevorzugt, wenn die Datenverarbeitungseinrichtung 9 eine Messeinrichtung 14 zur Messung zumindest eines meteorologischen Parameters umfasst.

Schließlich bezieht sich die Erfindung auch auf eine Datenverarbeitungsvorrichtung 9 und/oder auf einem Datenträger 16 (in Fig. 5 als Datenstick dargestellt) gespeichertes Computerprogrammprodukt, zur Ermittlung, insbesondere Vorhersage, zumindest einer meteorologischen Größe 10 zur Beschreibung einer aktuellen und/oder in der Vergangenheit liegenden und/oder zukünftigen Wettersituation, wobei in der Datenverarbeitungsvorrichtung 9 und/oder in dem Computerprogrammprodukt der Algorithmus 15 hinterlegt ist.

### Bezugszeichenaufstellung

- 1: erste meteorologische Parameter
- 2: Vorgabeparameter
- 3: Situationsparameter
- 4: zweite meteorologische Parameter
- 5: meteorologische Größe
- 6: Algorithmus
- 7: Algorithmus
- 8: Schnittstelle
- 9: Datenverarbeitungsvorrichtung
- 10: meteorologischen Größe
- 11: erste Messungen
- 12: zweite Messungen
- 13: Situationsparameter
- 14: Messeinrichtung
- 15: Algorithmus
- 16: Datenträger
- 17: Nachrichtenversandeinrichtung
- 18: Benutzerschnittstelle
- 19: abgeleiteter Wert
- P1: Gitterpunkte
- G1: erstes Gitter
- P2: Gitterpunkte
- G2: zweites Gitter
- T: Zeitkoordinate
- X: Ortskoordinate

## Patentansprüche

1. Verfahren zur Ermittlung, insbesondere Vorhersage, zumindest einer meteorologischen Größe (10) zur Beschreibung einer aktuellen und/oder in der Vergangenheit liegenden und/oder zukünftigen Wettersituation mittels einer Datenverarbeitungseinrichtung (9), bei dem
(a) aus ersten Messungen (11) gewonnene erste meteorologische Parameter (1) bereitgestellt werden, wobei die ersten meteorologischen Parameter (1) Gitterpunkten (P1) eines ersten Gitters (G1) zugeordnet sind,
**dadurch gekennzeichnet, dass** bei dem Verfahren
(b) zumindest ein Vorgabeparameter (2), welcher über eine Schnittstelle (8), insbesondere einer Benutzerschnittstelle, eingebbar ist, empfangen wird,
(c) die zumindest eine meteorologische Größe (10) in Abhängigkeit des zumindest eines Vorgabeparameters (2) durch Anwendung eines ersten Algorithmus (7) aus den ersten meteorologischen Parametern (1) ermittelt wird,
wobei vorzugsweise die ermittelte meteorologische Größe (10) an einer Benutzerschnittstelle (18) ausgegeben und/oder mittels einer elektronischen Nachrichtenversandeinrichtung (17) versendet wird.

2. Verfahren nach Anspruch 1, **dadurch gekennzeichnet, dass** der zumindest eine Vorgabeparameter (2) eine Zeitkoordinate (T), vorzugsweise einen Zeitpunkt, umfasst und dass in Schritt (c) die zumindest eine meteorologische Größe (10) für diese Zeitkoordinate (T) ermittelt wird, wobei vorzugsweise die Zeitkoordinate (T) in der Vergangenheit liegt.

3. Verfahren nach Anspruch 1 oder 2, **dadurch gekennzeichnet, dass** der zumindest eine Vorgabeparameter eine Ortskoordinate (X), vorzugsweise einen Punkt, umfasst und dass in Schritt (c) die zumindest eine meteorologische Größe (10) für diese Ortskoordinate (X) ermittelt wird, wobei vorzugsweise die Ortskoordinate (X) zwischen den Gitterpunkten (P1) des ersten Gitters (G1) liegt.

4. Verfahren nach einem der vorhergehenden Ansprüche, **dadurch gekennzeichnet, dass** der zumindest eine Vorgabeparameter (2) eine Charakterisierung zumindest einer örtlichen Gegebenheit, vorzugsweise betreffend den Bewuchs und/oder die Bebauung und/oder ein wind- und/oder sonnenabschattendes Objekt und/oder die Seehöhe und/oder die Landschaftsform, umfasst.

5. Verfahren nach einem der vorhergehenden Ansprüche, **dadurch gekennzeichnet, dass** der zumindest eine Vorgabeparameter (2) zumindest einen meteorologischen Vergleichsparameter umfasst, der - unabhängig von den ersten Messungen (11) - durch Beobachtung und/oder aus zumindest einer zweiten Messung (12) gewonnen wird, wobei vorzugsweise der Vergleichsparameter die aktuelle Wettersituation beschreibt.

6. Verfahren nach einem der vorhergehenden Ansprüche, **dadurch gekennzeichnet, dass** zumindest ein Situationsparameter (3), welcher über eine Schnittstelle (8), insbesondere einer Benutzerschnittstelle, eingebbar ist, empfangen wird,
wobei der Situationsparameter (3) der ermittelten meteorologischen Größe (10) zugeordnet wird
und/oder wobei der Situationsparameter (3) mit der ermittelten meteorologischen Größe (10) verglichen wird
und/oder wobei in Abhängigkeit des Situationsparameters (3), vorzugsweise in Abhängigkeit einer Abweichung der ermittelten meteorologischen Größe (10) von dem Situationsparameter (3), die ermittelte meteorologische Größe (10) angepasst und/oder der erste Algorithmus (7) verändert wird,
wobei vorzugsweise der Situationsparameter (3) eine aktuelle Situation, insbesondere die Wettersituation oder ein durch die Wettersituation bedingtes Vorgehen, insbesondere einen Enteisungseinsatz oder einen Straßenräumungseinsatz, beschreibt.

7. Verfahren nach Anspruch 6, **dadurch gekennzeichnet, dass** die meteorologische Größe (10) für verschiedene Zeitpunkte ermittelt wird und Situationsparameter (3) für korrespondierende Zeitpunkte empfangen werden.

8. Verfahren nach Anspruch 6 oder 7, **dadurch gekennzeichnet, dass** der zumindest eine Situationsparameter (3) einen meteorologischen Parameter umfasst, der - unabhängig von den ersten Messungen (11) - durch Beobachtung und/oder aus zumindest einer zweiten Messung (12) gewonnen wird.

9. Verfahren nach einem der Ansprüche 6 bis 8, **dadurch gekennzeichnet, dass** der zumindest eine Situationsparameter (3) einen Parameter umfasst, der einen physiologischen Zustand und/oder eine subjektive Empfindung zumindest einer Person beschreibt.

10. Verfahren nach einem der vorhergehenden Ansprüche, **dadurch gekennzeichnet, dass** in Abhängigkeit der ermittelten meteorologischen Größe (10) - vorzugsweise mittels eines Algorithmus oder einer Zuordnungstabelle - ein Situationsparameter (13), welcher vorzugsweise ein meteorologischer Parameter ist und/oder einen physiologischen Zustand und/oder eine subjektive Empfindung zumindest einer Person beschreibt, ermittelt oder geschätzt wird, wobei vorzugsweise der Situationsparameter (13) an einer Benutzerschnittstelle (18) ausgegeben und/oder mittels einer elektronischen Nachrichtenversandeinrichtung (17) versendet wird.

11. Verfahren nach einem der vorhergehenden Ansprüche, **dadurch gekennzeichnet, dass** eine meteorologische Größe (5) unabhängig von dem zumindest einen Vorgabeparameter (2) durch Anwendung eines zweiten Algorithmus (6) aus den ersten meteorologischen Parametern (1) ermittelt wird.

12. Verfahren nach Anspruch 11, **dadurch gekennzeichnet, dass** die unabhängig von dem zumindest einen Vorgabeparameter (2) ermittelte meteorologische Größe (5) und die - gemäß Schritt (c) - in Abhängigkeit des zumindest eines Vorgabeparameters (2) ermittelte meteorologische Größe (10) miteinander verglichen werden, wobei vorzugsweise in Abhängigkeit der Abweichung der unabhängig von dem zumindest einen Vorgabeparameter (2) ermittelten meteorologischen Größe (5) von der in Abhängigkeit des zumindest eines Vorgabeparameters (2) ermittelten meteorologischen Größe (10) der erste Algorithmus (7) verändert oder angepasst wird und/oder ein aus beiden Größen (5, 10) abgeleiteter Wert (19) ermittelt und vorzugsweise an einer Benutzerschnittstelle (18) ausgegeben und/oder vorzugsweise mittels einer elektronischen Nachrichtenversandeinrichtung (17) versendet wird.

13. Verfahren nach einem der vorhergehenden Ansprüche, **dadurch gekennzeichnet, dass**
vor oder in dem Schritt (c) aus den ersten - den Gitterpunkten (P1) des ersten Gitters (G1) zugeordneten - Parametern (1) zweite - den Gitterpunkten (P2) eines zweiten Gitters (G2) zugeordneten - Parameter (4) gebildet werden, wobei die Gitterpunkte (P2) des zweiten Gitters (G2) räumlich höher aufgelöst sind als die Gitterpunkte (P1) des ersten Gitters (G1), wobei vorzugsweise die Bildung der zweiten Parameter (4) durch Interpolation und/oder Mittelung der ersten Parameter (1) erfolgt, und
die zumindest eine meteorologische Größe (10) aus den zweiten meteorologischen Parametern (4), vorzugsweise durch Interpolation und/oder Mittelung, abgeleitet wird.

14. Verfahren nach einem der vorhergehenden Ansprüche, **dadurch gekennzeichnet, dass** die ersten meteorologischen Parameter (1) Werte der Temperatur und/oder des Luftdrucks und/oder der Luftfeuchtigkeit und/oder der Windstärke und/oder der Windrichtung und/oder des Niederschlags und/oder der Bewölkung und/oder der Sonneneinstrahlung umfassen
und/oder dass die zumindest eine meteorologische Größe (10) einen Wert der Temperatur und/oder des Luftdrucks und/oder der Luftfeuchtigkeit und/oder der Windstärke und/oder der Windrichtung und/oder des Niederschlags und/oder der Bewölkung und/oder der Sonneneinstrahlung umfasst.

15. Verfahren nach einem der vorhergehenden Ansprüche, **dadurch gekennzeichnet, dass** die ersten meteorologischen Parameter (1) aktuelle und/oder in der Vergangenheit liegende und/oder zukünftig zu erwartende Werte umfassen.

16. Verfahren nach einem der vorhergehenden Ansprüche, **dadurch gekennzeichnet, dass** der Algorithmus (7) ein konfigurierbarer und/oder selbstlernender Algorithmus ist.

17. Verfahren nach einem der vorhergehenden Ansprüche, **dadurch gekennzeichnet, dass** die Datenverarbeitungseinrichtung (9) ein tragbares Gerät, vorzugsweise ein Smartphone oder ein Tablett, ist.

18. Verfahren nach einem der vorhergehenden Ansprüche, **dadurch gekennzeichnet, dass** die Datenverarbeitungseinrichtung (9) eine Messeinrichtung (14) zur Messung zumindest eines meteorologischen Parameters umfasst.

19. Algorithmus (15) zur Ermittlung, insbesondere Vorhersage, zumindest einer meteorologischen Größe (10) zur Beschreibung einer aktuellen und/oder in der Vergangenheit liegenden und/oder zukünftigen Wettersituation, wobei der Algorithmus die Schritte eines Verfahrens nach einem der vorhergehenden Ansprüche aufweist.

20. Datenverarbeitungsvorrichtung (9) und/oder auf einem Datenträger (16) gespeichertes Computerprogrammprodukt, zur Ermittlung, insbesondere Vorhersage, zumindest einer meteorologischen Größe (10) zur Beschreibung einer aktuellen und/oder in der Vergangenheit liegenden und/oder zukünftigen Wettersituation, wobei in der Datenverarbeitungsvorrichtung (9) und/oder in dem Computerprogrammprodukt ein Algorithmus (15) nach Anspruch 19 hinterlegt ist.
